# FASCICULE DE BREVET EUROPEEN

(11) **EP 0 781 799 B1**
(45) Date de publication et mention de la délivrance du brevet: **25.10.2000**
(21) Numéro de dépôt: 96402670.2
(22) Date de dépôt: 09.12.1996
(51) Int. Cl.: C08K 3/04, B32B 27/34, F16L 9/12

(54) **Compositions antistatiques et adhérentes à base de polyamide**
Antistatische Zusammensetzungen und Klebstoffe basierend auf Polyamide
Antistatic compositions and adhesives based on polyamide

(30) Priorité: 19.12.1995 FR 9515218
(43) Date de publication de la demande: 02.07.1997
(73) Titulaire: Atofina, 92800 Puteaux (FR)
(72) Inventeur: Bussi, Philippe, Résidence Clairval, 27300 Bernay (FR); Fernagut, François, 27300 Bernay (FR); Renouard, Philippe, 27800 Brionne (FR)

(56) Documents cités:
- EP-A- 0 297 888
- EP-A- 0 506 386
- WO-A-94/29626
- FR-A- 2 349 613
- GB-A- 2 007 696
- US-A- 4 337 179
- US-A- 5 524 673

## Description

La présente invention a pour objet des compositions antistatiques et adhérentes à base de PA, utilisables notamment pour la fabrication de tubes et/ou de canalisations multicouches pour le transport et/ou le stockage d'hydrocarbures.

Dans les véhicules automobiles, sous l'effet de la pompe à injection, l'essence circule à grande vitesse dans les canalisations reliant le moteur au réservoir. Dans certains cas, le frottement essence / paroi interne du tube peut générer des charges électrostatiques, dont l'accumulation peut conduire à une décharge électrique (étincelle) capable d'enflammer l'essence avec des conséquences catastrophiques (explosion). Aussi, est-il nécessaire de limiter la résistivité superficielle de la face interne du tube à une valeur en général inférieure à 10⁶ ohms. Il est connu d'abaisser la résistivité superficielle de résines ou matériaux polymériques en leur incorporant des matériaux conducteurs et/ou semi-conducteurs tels que le noir de carbone, les fibres en acier, les fibres de carbone, les particules (fibres, plaquettes, sphères, ...) métallisées avec de l'or, de l'argent ou du nickel.

Parmi ces matériaux, le noir de carbone est plus particulièrement employé, pour des raisons économiques et de facilité de mise en oeuvre. En dehors de ses propriétés électroconductrices particulières, le noir de carbone se comporte comme une charge telle que par exemple le talc, la craie, le kaolin. Ainsi, l'homme de l'art sait que lorsque le taux de charges augmente, la viscosité du mélange polymère / charge augmente. De même, lorsque le taux de charge augmente, le module de flexion du polymère chargé augmente. Ces phénomènes connus et prévisibles sont explicités dans "Handbook of Fillers and Reinforcements for Plastics" édité par H.S. Katz et J.V. Milewski - Van Nostrand Reinhold Company - ISBN 0-442-25372-9, voir en particulier le chapitre 2, section II pour les charges en général et le chapitre 16, Section VI pour le noir de carbone en particulier.

Quant aux propriétés électriques du noir de carbone, le bulletin technique "Ketjenblack EC - BLACK 94/01" de la société AKZO NOBEL indique que la résistivité de la formulation chute très brutalement lorsque un taux critique de noir de carbone, appelé seuil de percolation, est atteint. Lorsque le taux de noir de carbone augmente encore, la résistivité diminue rapidement jusqu'à atteindre un niveau stable (zone de plateau). On préfère donc, pour une résine donnée, opérer dans la zone de plateau, où une erreur de dosage n'aura qu'une faible influence sur la résistivité du compound. En outre, le dosage de produits de très faible densité apparente, comme le noir de carbone, n'est pas aisé et une erreur de dosage du noir est toujours possible.

Actuellement, les tubes de polyamide sont couramment utilisés pour le transport d'essence dans les véhicules automobiles En effet, les polyamides représentent un matériau idéal pour la fabrication de tubes : leur résistance mécanique est excellente et leur flexibilité suffisante pour qu'un tube supporte, sans casser, durant pratiquement toute la vie d'un véhicule, l'accumulation de mouvements de flexion, notamment à basse température. La demanderesse a constaté que pour du polyamide 12 de viscosité inhérente 1,45 dans le m-crésol et plastifié par 12,5 % en masse de n-butyl benzène sulfonamide (BBSA), la résistivité superficielle évolue peu au-delà de 9% en masse de noir de carbone (début de la zone de plateau) (Noir de Carbone Ketjenblack® EC 600 JD de la société AKZO NOBEL, caractérisé par un volume de pore de 400 ml de di-butyl-phtalate pour 100 g de noir de carbone et par une surface spécifique de 1250 g/m², mesurée par la méthode d'adsorption d'azote (méthode BET)).

Mais ces tubes en polyamide antistatique ne répondent plus aux nouvelles exigences des constructeurs automobiles en ce qui concerne la perméabilité. Avec l'ajout, de plus en plus fréquent, de méthanol dans l'essence, la sensibilité des tubes en polyamide se manifeste par un gonflement du tube entraînant une diminution des propriétés mécaniques et des modifications dimensionnelles.

Pour remédier à cet inconvénient, tout en conservant les effets mécaniques des polyamides, la demanderesse a proposé dans EP558.373 de gainer la paroi interne du tube de polyamide d'une couche de polymère fluoré, de préférence de PVDF, la couche de polymère fluoré étant de préférence la plus fine possible afin de conserver au maximum la flexibilité du polyamide, sachant que les polymères fluorés et notamment le PVDF, ne sont pas particulièrement réputés pour leurs propriétés en souplesse. Mais le PVDF, une fois chargé de noir de carbone, a une très mauvaise résistance au choc, notamment à basse température et cette solution n'est pas satisfaisante.

Une autre alternative, proposée également par la demanderesse dans WO 94/29626 consiste en un tube, à base de polyamide, constitué d'une couche externe en polyamide, d'une couche médiane en polymère fluoré, de préférence en PVDF, et d'une couche interne de polyamide, ces couches étant respectivement liées entre elles par des couches de liant d'adhésion. Or, lorsque la couche interne à base de PA est chargée avec du noir de carbone dans les proportions de la zone de plateau, l'adhésion PA/liant d'adhésion est quasi nulle.

Cette absence d'adhésion est d'autant plus surprenante que si l'on remplace le noir de carbone par une autre charge de renforcement telle que par exemple le carbonate de calcium (OMYALITE® 90T de la société OMYA) dans les mêmes proportions massiques, cette nouvelle composition à base du même polyamide 12 possède une excellente adhésion en coextrusion ou en pressage de films sur un liant de coextrusion.

La demanderesse a mis au point des compositions antistatiques i-e de résistivité de surface inférieure ou égale à 10⁶ Ω à base de polyamide susceptibles d'adhérer avec les liants d'adhésion des polymères fluorés. Les compositions selon l'invention sont caractérisées en ce qu'elles comprennent une quantité suffisante de noir de carbone pour adhérer avec les liants d'adhésion des polymères fluorés et avoir une résistivité de surface inférieure ou égale à 10⁶ Ω.

Il est en effet indispensable que le polymère fluoré, et notamment le PVDF, soit lié de façon efficace au polyamide. Ainsi, un tube qui ne présente pas de liaison entre le polymère fluoré et le polyamide ne peut posséder une bonne flexibilité et par conséquent ne peut être plié ou coudé facilement par formage à chaud ; dans ce cas, le matériau le plus mince forme des plis au cours de l'opération.

Par ailleurs, si les couches n'adhèrent pas entre elles, la condensation éventuelle des gaz entre deux couches polymère fluoré/polyamide peut, dans le temps, entraîner la déformation de la partie du tube la plus mince. En outre, les tubes étant reliés entre eux, ainsi qu'au réservoir d'essence et au carburateur par des raccords, ceux-ci ne peuvent assurer l'étanchéité s'ils s'appuient sur des couches dissociées. Enfin, dans le cas où le polymère fluoré est du PVDF et lorsque l'épaisseur de la couche de PVDF, à l'intérieur du tube, est très mince, par exemple de 10 à quelques dizaines de µm, et sans adhésion, une dépression dans le tube déforme de façon irréversible le film de polyfluorure de vinylidène rendant le tube inutilisable.

Par liants d'adhésion au sens de la présente invention, on entend des compositions thermoplastiques à base d'un ou plusieurs polymères, contenant des fonctions chimiques réactives vis-à-vis des bouts de chaînes des polyamides, comme par exemple les groupements anhydrides, acides, époxies. Ces groupements peuvent être introduits dans le liant en tant que comonomère du ou des polymères présents dans la composition thermoplastique ou par greffage sur le ou les polymères présents dans la composition thermoplastique. Parmi ces liants, on retient plus particulièrement les liants décrits dans EP 558.373, WO 94/25524, WO 94/29626 et EP 637.511 et permettant l'adhésion des polyamides et des polymères fluorés.

Par polyamide ou PA, on entend les polyamides aliphatiques thermoplastiques et notamment les polyamide 11 (PA-11), polyamide 12 (PA-12) ou polyamide 12,12 (PA-12,12) plastifié ou non, ou encore les polyamide 6 (PA-6) ou polyamide 6,6 (PA-6,6). Le PA peut éventuellement être un produit modifié pour résister aux chocs et/ou être un copolymère et/ou un mélange de polymères. Le PA peut aussi contenir des charges et/ou additifs classiques pour les polyamides. La quantité de charges et/ou additifs incorporée est elle aussi classique, et est fonction du cahier des charges des constructeurs automobiles. Selon un mode de réalisation, cette charge consiste en un rebroyé. Ce terme "rebroyé" désigne le broyat d'un tube mal formé au cours du procédé de fabrication, et par là impropre à l'usage auquel on le destine, qui se trouve ainsi recyclé. Il est donc possible de broyer ces tubes mal formés et de les incorporer dans la couche interne et/ou externe.

Parmi les polymères fluorés selon l'invention, on peut citer :
- les homo- et copolymères du fluorure de vinylidène (VF2),
- les homo- et copolymères du trifluoroéthylène (VF3)
- les homo- et copolymères, et notamment terpolymères, associant des restes des motifs chlorotrifluoroéthylène (CTFE), tétrafluoroéthylène (TFE), hexafluoropropène (HFP) et/ou éthylène et éventuellement des motifs VF2 et/ou VF3. A titre d'exemple, on peut citer le polytétrafluoroéthylène (PTFE), le poly(éthylène-tétrafluoroéthylène) (ETFE).

Par polymère fluoré, on entend également des mélanges d'au moins 70% en poids des précédents avec d'autres polymères.

Parmi les polymères fluorés, on utilise avantageusement les homo- et copolymères de fluorure de vinylidène possédant au moins 70 % en poids de restes VF2, désignés dans tout le texte par PVDF. On entend également par PVDF les mélanges des précédents avec au moins un autre polymère thermoplastique, à condition qu'au moins 50 % en poids de motifs VF2 soit présents dans le mélange.

L' invention concerne le procédé de préparation des compositions antistatiques et adhérentes définies ci-dessus. On peut mélanger le PA à l'état fondu avec les additifs, charges éventuelles ainsi que le noir de carbone dans les proportions correspondant exactement à celles de la composition désirée, mais comme indiqué plus haut, cette méthode oblige à mesurer très précisément la quantité de noir de carbone à ajouter car on opère avant la zone de plateau.

Pour préparer les compositions selon l'invention, la demanderesse a mis au point un procédé en deux étapes où l'on prépare d'abord une première composition en se plaçant dans la zone de plateau, cette composition correspondant à un mélange-maître antistatique (mais en général non adhérent), puis ce mélange-maître dont a préalablement mesuré le taux exact de noir de carbone est "dilué" avec du polyamide ne contenant pas de noir de carbone, par exemple par extrusion, de manière à obtenir une composition au sens de la présente invention.

Tout ou partie des additifs et/ou charges (hormis le noir de carbone) peuvent être incorporés lors de cette étape de "dilution".

L'invention a également pour objet des matériaux composites comprenant successivement au moins l'association : composition adhérente et antistatique à base de PA / liant d'adhésion/ polymère fluoré, la composition à base de PA, le liant et le polymère fluoré étant tels que définis précédemment. Ces matériaux composites peuvent être par exemple des matériaux multicouches, tels que des films, où l'on trouve successivement :
* une couche de composition adhérente et antistatique à base de PA,
* une couche de liant d'adhésion,
* une couche de polymère fluoré.

Parmi les matériaux composites, on citera tout particulièrement les tubes multicouches -mais aussi les conteneurs et les bidons muticouches obtenus notamment par co-extrusion-soufflage- pour le transport et/ou le stockage d'hydrocarbures et notamment d'essence comprenant:
* une couche interne à base d'une composition antistatique et adhérente telle que définie précédemment,
* une couche médiane en polymère fluoré, de préférence en PVDF, et
* une couche externe de polyamide,
ces couches étant respectivement liées entre elles par des couches de liant d'adhésion.

Les polyamides des couches externe et interne peuvent être identiques ou différents. Chaque couche de polyamide peut être formée d'une ou de plusieurs sous-couches, chacune de ces sous-couches étant formée d'un polyamide différent.

Chaque couche de polymère fluoré peut être formée d'une ou de plusieurs sous-couches, chacune de ces sous-couches étant formée d'un polymère fluoré différent.

Chaque couche de liant peut être formée d'une ou de plusieurs sous-couches, chacune de ces sous-couches étant formée d'un liant différent.

Selon un mode de réalisation, l'épaisseur des couches de polyamide est comprise entre 0,3 et 1,8 mm, l'épaisseur de la couche de polymère fluoré est comprise entre 10 µm et 1 mm et l'épaisseur des couches de liant d'adhésion est comprise entre 10 µm et 1 mm.

Les épaisseurs des couches de polyamides et de liants peuvent être identiques ou différentes. De telles épaisseurs des constituants sont appropriées pour la fabrication de tubes d'alimentation d'essence pour moteurs dont le diamètre et généralement compris entre 6 et 12 mm.

L'invention concerne aussi des tubes identiques aux précédents sauf leur diamètre plus important. Ils conviennent, par exemple, pour relier le stockeur d'essence enterré et la pompe de la station service.

Les tubes selon l'invention sont obtenus de façon connue par coextrusion des cinq composants dans les conditions d'extrusion connues propres à chacun des matériaux thermoplastiques. La coextrusion des cinq composants facilite l'extrusion de la couche médiane de polymère fluoré, notamment de PVDF, qui est relativement difficile lorsque cette couche n'est pas prise "en sandwich".

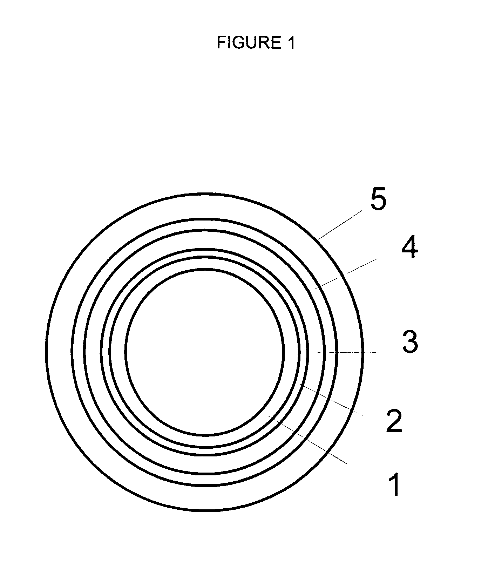

La figure 1 correspond à un tube 5 couches pour le transport d'essence particulièrement préféré par la demanderesse :
- une couche interne (1) d'épaisseur égale à environ 200 µm à base de PA-12 antistatique et adhérant à
   * une couche de liant (2) (tel que décrit dans WO 94/25524) d'épaisseur 80 µm adhérant à
   * une couche de PVDF (3) vendue par la demanderesse sous la dénomination commerciale KYNAR® 6000 HD d'épaisseur 120 µm et adhérant à
   * une couche de liant (4) (tel que décrit dans WO 94/25524) d'épaisseur 80 µm adhérant à
   * une couche à base de PA-12 (5) vendue par la demanderesse sous la dénomination commerciale MA 4411 d'épaisseur 520 µm.

### EXEMPLES

Dans tout ce qui suit, et sauf indication contraire, les proportions sont des proportions massiques.
• Le PA#1 est un PA-12 plastifié par 7,5 % de n-butyl Benzène Sulfonamide (BBSA) présentant un module de flexion de 450 MPa (norme ISO 178) et une résilience au choc Charpy avec entaille de 9 kJ/m² à -40°C (norme ISO 179).
• Le liant d'adhésion est un mélange obtenu par extrusion sur extrudeuse double vis comprenant 50% en masse d'homopolymère de polyfluorure de vinylidène d' indice de fluidité de 13g/10min à 230°C sous 5 kg (norme ISO 1133), de 15% en masse d'un copolymère de type acrylique-imide comportant des groupements acides et anhydrides dans sa structure et caractérisé par un module de flexion de 4.100 MPa (norme ISO 178), et 35% en masse d'un modifiant choc de type core-shell méthyl-méthacrylate butadiène styrène (MBS). Le copolymère de type acrylique-imide est commercialisé par la société Rohm & Haas sous la dénomination EXL 4.000 et par la société Rohm GMbH sous la dénomination FLEXIMID.
• Les PA#2 à PA#6 sont des compositions à base de PA-12 plastifié par 12,5 % de n-butyl benzène sulfonamide (BBSA) et contenant du noir de carbone électroconducteur ainsi que 7% d'élastomère thermoplastique à base de polyamide de type PEBA de dureté Shore D égale à 40 et de point de fusion 147 °C.
• Le noir de carbone électroconducteur mis en oeuvre a un volume de pore de 400 ml de di-butyl-phtalate pour 100 g de noir de carbone et une surface spécifique de 1250 g/m², mesurée par la méthode d'adsorption d'azote (méthode BET) - référence Ketjenblack® EC600JD de la société Akzo Nobel. Le pourcentage massique de noir introduit est de :
11,1 pour le PA#2
9,4 pour le PA#3
8,6 pour le PA#4
6,5 pour le PA#5
0 pour le PA#6
• préparation des compositions à base de PA#2 à PA#6 sur extrudeuse :
De manière classique, les granulés de polyamide plastifiés et de polyether bloc amide sont introduits après mélange mécanique dans la trémie d'alimentation d'une extrudeuse de type co-malaxeur BUSS®. Le noir de carbone est introduit en zone fondue à l'aide d'une trémie gaveuse. Les températures matière d'extrusion sont typiquement de l'ordre de 245 à 260°C. La vitesse de vis du malaxeur est de 285 trs/min alors que la vitesse de vis de l'extrudeuse de reprise est de 33 trs/min. Le débit est de 15 à 20 kg/h.
• Des tubes sont produits par coextrusion. La ligne de coextrusion utilisée permet de réaliser indifféremment des tubes comportant 1,2,3,4 ou 5 couches. Les tubes produits sont calibrés aux dimensions suivantes : diamètre extérieur environ 8 mm, diamètre intérieur environ 6 mm. Ils comportent 3 couches :
- une couche extérieure (PA#1) de 770 µm d'épaisseur, alimentation de cette couche par une extrudeuse monovis de diamètre 45, pour une température en tête de vis de l'ordre de 230°C.
- une couche de liant (L) de 80 µm d'épaisseur, alimentation de cette couche par une extrudeuse monovis de diamètre 25, pour une température en tête de vis de l'ordre de 250°C.
- une couche interne (PA#2 à PA #6) de 150 µm d'épaisseur, alimentation de cette couche par une extrudeuse monovis de diamètre 30, pour une température en tête de vis de l'ordre de 245°C.

Les vitesses de vis sont choisies de manière à assurer la répartition des couches voulues.
• Les tests de pelage sur tube (adhésion entre les couches de la structure multicouche) sont effectués de la manière suivante :
L'échantillon est découpé sur un tube 6x8 mm (diamètres interne x externe) à l'aide d'un appareil permettant de raboter une bande de 20 cm de long sur 6 mm de large. Après amorçage à l'aide d'une lame de rasoir, la force de pelage est mesurée à l'aide d'un dynamomètre à une vitesse de 200 mm/min et un angle de pelage de 180°. L'adhésion est rapportée en kg/cm. On utilise la correspondance suivante :

| | |
|---|---|
| adhésion interfaciale > 6 kg/cm | +++ |
| | excellente |
| 2 kg/cm < adhésion interfaciale < 6 kg/cm | ++ |
| | moyenne |
| adhésion interfaciale < 2 kg/cm | 0 |
| | nulle |

• Les mesures de résistivité superficielle sont réalisées sur des tubes selon le test indiqué par la norme GM213M : Deux électrodes cylindriques en cuivre sont introduites aux extrémités d'un tube de 100 mm de longueur. On applique une tension adaptée à ces électrodes et on mesure le courant. La résistance ainsi mesurée (mesure brute) est ensuite multipliée par la circonférence interne du tube puis divisée par la distance entre les électrodes ; on obtient la résistivité superficielle qui est exprimée en ohms (Ω).
• Résultats obtenus sur les différentes tubes :

| structure | adhésion couche interne / liant | adhésion liant / couche externe | résistivité superficielle (Ω) |
|---|---|---|---|
| PA#1/L/PA#1 | +++ | +++ | >10¹³ |
| PA#1/L/PA#2 | 0 | +++ | 10²-10³ |
| PA#1/L/PA#3 | 0 | +++ | 10²-10³ |
| PA#1/L/PA#4 | 0 | +++ | 10²-10³ |
| PA#1/L/PA#5 | ++ | +++ | 10⁵-10⁶ |
| PA#1/L/PA#6 | +++ | +++ | >10¹³ |

D'après le Tableau ci-dessus, la composition dénommée PA#5 correspond à l'invention.

## Revendications

1. Composition antistatique à base de polyamide 12 éventuellement plastifié, caractérisée en ce que le PA-12 a une viscosité inhérente de 1,45 et qu'elle comprend de 4,5 à 8 % en poids de noir de carbone de volume de pore de 400 ml de di-butyl-phtalate pour 100 g de noir de carbone et une surface spécifique de 1250 g/m², pour avoir simultanément une résistivité superficielle de 10⁵ à 10⁶ Ω et être adhérente sur des liants d'adhésion des polymères fluorés.

2. Procédé de préparation de la composition selon la revendication 1, caractérisé en ce que l'on procède en deux étapes successives :
- on prépare d'abord une première composition appelée ci-après mélange-maître en se plaçant dans la zone de plateau de la résistivité surfacique,
- puis ce mélange-maître dont a préalablement mesuré le taux exact de noir de carbone est "dilué" avec du polyamide ne contenant pas de noir de carbone.

3. Matériaux composites comprenant successivement au moins l'association :
- composition selon la revendication 1
- liant d'adhésion de polymère fluoré,
- polymère fluoré, de préférence PVDF.

4. Tubes, conteneurs et bidons multicouches pour le transport d'hydrocarbures selon la revendication 3, caractérisés en ce qu'ils comprennent :
- une couche interne destinée à entrer en contact avec des hydrocarbures et à base d'une composition selon la revendication 1,
- une couche médiane en polymère fluoré, de préférence en PVDF, et
- une couche externe de polyamide,
ces couches étant respectivement liées entre elles par des couches de liant d'adhésion.

5. Tubes, conteneurs et bidons selon la revendication 4, caractérisés en ce que le liant d'adhésion est un mélange d'homopolymère de poly(fluorure de vinylidène), d'un copolymère de type acrylique-imide comportant des groupements acides et anhydrides dans sa structure et d'un modifiant choc de type core-shell méthyl-méthacrylate butadiène styrène (MBS).

6. Procédé de fabrication des matériaux composites, des tubes, conteneurs et bidons selon l'une des revendications 3 à 5, par co-extrusion et/ou par pressage de films.

## Patentansprüche

1. Antistatische Zusammensetzung auf der Basis von gegebenenfalls weichgemachtem Polyamid 12, dadurch gekennzeichnet, daß das PA12 eine Eigenviskosität von 1,45 aufweist und dadurch, daß sie 4,5 bis 8 Gew.-% Ruß mit einem Porenvolumen von 400 ml Dibutylphthalat pro 100 g Ruß und einer spezifischen Oberfläche von 1250 g/m² enthält, wodurch sie einen Oberflächenwiderstand von 10⁵ bis 10⁶ Ω aufweist und gleichzeitig an Haftbindemitteln für fluorierte Polymere haftet.

2. Verfahren zur Herstellung der Zusammensetzung nach Anspruch 1, dadurch gekennzeichnet, daß nacheinander die beiden Schritte aufgeführt werden:
- zunächst wird eine als Vorgemisch bezeichnete erste Zusammensetzung hergestellt, wobei im Plateaubereich des Oberflächenwiderstands gearbeitet wird, und
- dann wird das Vorgemisch, dessen genauer Gehalt an Ruß vorab bestimmt wird, mit Polyamid, das keinen Ruß enthält, "verdünnt".

3. Verbundmaterialien, die aufeinanderfolgend mindestens die folgende Kombination enthalten:
- die Zusammensetzung nach Anspruch 1,
- ein Haftbindemittel für ein fluoriertes Polymer, und
- ein fluoriertes Polymer und vorzugsweise PVDF.

4. Mehrlagige Rohre, Behälter und Kanister für den Transport von Kohlenwasserstoffen nach Anspruch 3, dadurch gekennzeichnet, daß sie aufweisen:
- eine innere Schicht auf der Basis einer Zusammensetzung nach Anspruch 1, die dafür vorgesehen ist, mit Kohlenwasserstoffen in Kontakt zu kommen,
- eine mittlere Schicht eines fluorierten Polymers und vorzugsweise PVDF, und
- eine äußere Polyamidschicht,
wobei die Schichten untereinander über Schichten des Haftbindemittels verbunden sind.

5. Rohre, Behälter und Kanister nach Anspruch 4, dadurch gekennzeichnet, daß das Haftbindemittel ein Gemisch eines Polyvinylidenfluorid-Homopolymers, eines Copolymers vom Acryl-Imid-Typ, das Säure- und Anhydridgruppen in seiner Struktur aufweist, und eines schlagzähmachenden Hilfsstoffs vom Typ core-shell Methylmethacrylat-Butadien-Styrol (MBS) ist.

6. Verfahren zur Herstellung von Verbundmaterialien, Rohren, Behältern und Kanistern nach einem der Ansprüche 3 bis 5 durch Coextrusion und/oder Folienpressen.

## Claims

1. Antistatic composition based on optionally plasticized polyamide 12, characterized in that the PA-12 has an inherent viscocity of 1.45 and includes from 4.5 to 8% by weight of carbon black with a pore volume of 400 ml of dibutyl phthalate per 100g of carbon black and a specific surface of 1250 g/m² so as simultaneously to have a surface resistivity of from 10⁵ to 10⁶ Ω and to be adherent to adhesive binders for fluoropolymers.

2. Process for the preparation of the composition according to Claim 1, characterized in that it is carried out in two successive stages:
- a first composition, subsequently called master mix, is prepared first by working in the plateau region of the surface resistivity,
- then this master mix, the precise carbon black content of which has been measured beforehand, is "diluted" with polyamide containing no carbon black.

3. Composite materials including successively at least the combination:
- composition according to Claim 1
- fluoropolymer adhesive binder
- fluoropolymer, preferably PVDF.

4. Multilayer pipes, containers and drums for conveying hydrocarbons, according to Claim 3, characterized in that they include:
- an inner layer intended to come into contact with hydrocarbons, based on a composition according to Claim 1,
- a middle layer made of fluoropolymer, preferably of PVDF, and
- an outer layer of polyamide,
these layers being bonded to each other respectively by layers of adhesive binder.

5. Pipes, containers and drums according to Claim 4, characterized in that the adhesive binder is a mixture of poly(vinylidene fluoride) homopolymer, of a copolymer of acrylic-imide type containing acid and anhydride groups in its structure and of a methyl methacrylate-butadiene-styrene (MBS) impact modifier of core-shell type.

6. Process for the manufacture of the composite materials, the pipes, containers and drums according to one of Claims 3 to 5, by coextrusion and/or by pressing of films.
